# EUROPEAN PATENT APPLICATION

(11) **EP 1 450 383 A1**
(43) Date of publication of application: **25.08.2004**
(21) Application number: 03003739.4
(22) Date of filing: 19.02.2003
(51) Int. Cl.: H01H 9/02, H05B 37/02

(54) **intelligent switch assembly and system**

(71) Applicant: Taiwan Fuhbic Corporation, Taipei, Taiwan (CN)
(72) Inventor: Wu, Tung Ming, Taipei, Taiwan (CN)
(74) Representative: Casalonga, Axel

(57) **Abstract**

An intelligent switch, especially an intelligent switch and system for automatically intelligent buildings is disclosed. The intelligent switch includes a function switch a manual switch and a relay. The function switch is connected to a control module via a signal transmitting line and can be controlled by a remote transmission. The manual switch is able to operate the relay so that under the operation of the control module or the manual switch can control the position of a conducting sheet of the relay to determine a controlled facility device on or off. It is easier and more convenient for construction and for user's choice of a group operation function or a single operation function to control the system.

## Description

### BACKGROUND OF THE INVENTION

### Field of Invention

The present invention relates in general to a switch device, more particular, to an intelligent switch assembly which provides easy implementation in constructing and users' election of a group operating function or a single operating function for controlling the facilities of an intelligent building or the like.

### Description of Related Art

Due to highly developing information communicating techniques and popular Internet service, in intelligent buildings as constructed for office-automation (OA) or home-automation (HA) in recent years, various facilities are furnished such as appliance control, air-conditioning control, lighting control, entry and exit control, fire detection system, security system, etc. It can now utilize a single key control or a remote control via the telephone line or other communication means to perform the on-off operation and control operation for the single-line connected facilities.

The related arts are disclosed such as U.S. Patent NO. 5,209,560 of "Computer Controlled Lighting System with Intelligent Data Distribution Network" and Taiwan Patent Publications NO. 142763 of "Intelligent Multi-Functional Control Apparatus", NO. 310860 of "Intelligent Lighting Control and Security Apparatus" and NO. 237994 of "Embedded Switch Apparatus for controlling Lights".

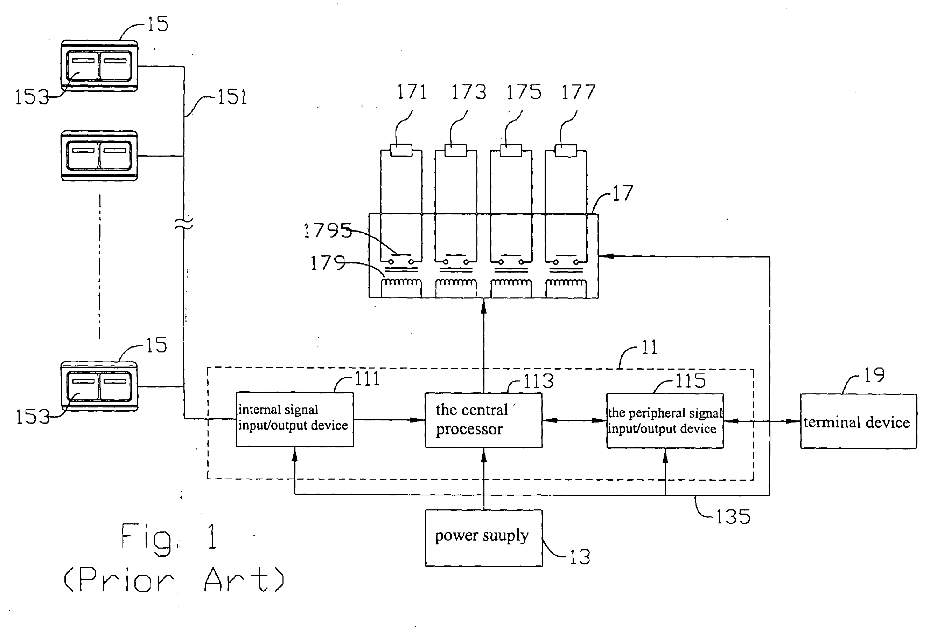

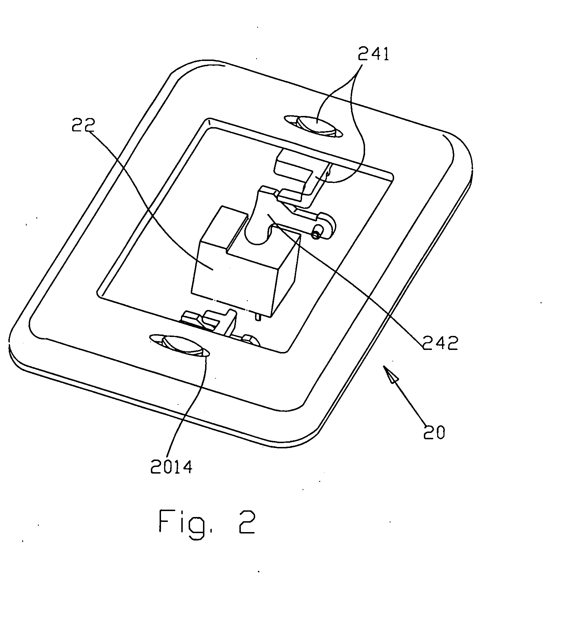

Referring to Fig. 1 shows a conventional intelligent switch device and system including a control module 11, a plurality of function switches 15, a power supply 13 and a wiring distributor 17. There is at least one operation button 153 located on the function switch 15, which is operated to transmit a command signal via a signal transmitting line 151 to an internal signal input/output device 111 and then to a central processor 113 of the control module 11. By a programmable operating process of the central processor 113, it can realized a corresponding command of an inputted signal with respect to the command signal transmitting from the internal signal input/output device 111. Next, according to the corresponding command, an alternative position of a conducting sheet 1795 with respect to each relay 179 of the distributor 17 is determined so that a device such as lighting device 171 or 173, a security device 175 or other appliances, curtain, air-conditioner, etc 177 with respect to a specific relay can be powered on or off. The control module 11 can further include a peripheral signal input/output device 115 to connect a terminal device 19 via the telephone line or other Internet communication lines. It is therefore capable of commanding the control module 11 by a long-distance remote monitoring and adversely outputting demand such as dialing a emergency call through the peripheral signal input/output device 115. Finally, the power supply 13 provides power to each device through a power line 135.

However, the conventional system exists the drawbacks as follows:
1. The function switch is connected to the control module via the signal transmitting line. In general, it needs detailed controlling software programming to obtain a group operation function of the system. It is not easy for the workers of assembling system to determine whether the system wiring and loading are normal. Thus, it is inconvenient and time-consuming in function tests when constructing the whole system.
2. The lighting devices and other facility devices are all connected to the distributor but the function switch device is only for accomplishing the on-off operation. Normally the wiring distributor is much more expensive for the above-mentioned system. Thus, it leads higher installation cost.
3. It is more complicated to program a group operation control of the lighting device and other facility devices in above-mentioned system. Thus, it exists many difficulties.
4. When the operation of the lighting device or other facility devices is failed, it needs to go distant distributor to examine the wiring lines. Nevertheless, users are always not familiar with the distributor and will thus suffer in dangers.

Therefore, the improvements are exists. It is a point how to improve the switch assembly accommodating the arrangement of the wiring lines of the intelligent switch system.

### SUMMARY OF THE INVENTION

It is therefore, in one aspect, an object of the present invention to provide an intelligent switch assembly and system including an additionally manual switch for singly setting the corresponding lighting control or controlling other single operation function besides the conventional function switch for controlling the group operation function. Thus, the manual switch performing the single operation function can substitute the function switch performing the group operation function when the function switch cannot work. It is convenient for users and can increase the safety.

It is another object of the present invention to provide an intelligent switch assembly and system which directly connects to one of the lighting devices and other facility devices. Thus, the wiring arrangement of present invention is similar to a common single switch system. It increases workers' accommodation and reduces the cost.

It is yet another object of the present invention to provide an intelligent switch assembly and system including a control unit, a relay unit, an automatic switch and a manual switch. The control unit, electrically connected to the function switch, includes a CPU and other electronic components for actuating the relay unit. In addition, the relay unit can be also actuated by operating the manual switch through mechanical operation to achieve the electrical connection.

It is still a further object of the present invention to provide an intelligent switch assembly and system with remote control function.

It is still a further object of the present invention to provide an intelligent switch assembly and system including both a manual switch performing a single operation function and a function switch performing a group operation function for users' choice in practical operation.

It is still a further object of the present invention to provide an intelligent switch assembly and system so that it can depend on the switch assembly instead of the distant distributor to examine the wiring lines of the system.

It is still a further object of the present invention to provide an intelligent switch assembly and system excluding the wiring distributor. It is simple and cost-efficient to build the relay in the switch assembly.

Further scope of applicability of the present invention will become apparent from the detailed description given hereinafter. However, it should be understood that the detailed description and specific examples, while indicating preferred embodiments of the invention, are given by way of illustration only, since various changes and modifications within the spirit and scope of the invention will become apparent to those skilled in the art from this detailed description.

### BRIEF DESCRIPTION OF THE DRAWINGS

The present invention will become fully understood from the detailed description given herein below illustration only, and thus are not limitative of the present invention, and wherein:
Fig. 1 is a perspective view of a conventional intelligent switch assembly and system;
Fig. 2 is a schematic view of an intelligent switch assembly according to the present invention;
Fig. 2A is a perspective view of an intelligent switch assembly according to the present invention;
Fig. 3 is a perspective view of an exploded view of the intelligent switch assembly according to the present invention;
Figs. 4 and 4A are a perspective view of a manual switch of the intelligent switch assembly according to the present invention;
Fig. 5 is a perspective view of a disconnection condition of the manual switch according to the present invention;
Fig. 6 is a perspective view of a connection condition of the manual switch according to the present invention;
Fig. 7 is a perspective view of a disconnection condition of the function switch according to the present invention;
Fig. 8 is a perspective view of a connection condition of the function switch according to the present invention;
Fig. 9 is a perspective view of a conventional intelligent switch assembly and system according to the present invention;
Fig. 10 is a perspective view of another preferred embodiment of the intelligent switch assembly according to the present invention; and
Fig. 11 is a perspective view of another preferred embodiment of the intelligent switch assembly system according to the present invention.

### DETAILED DESCRIPTION OF THE INVENTION

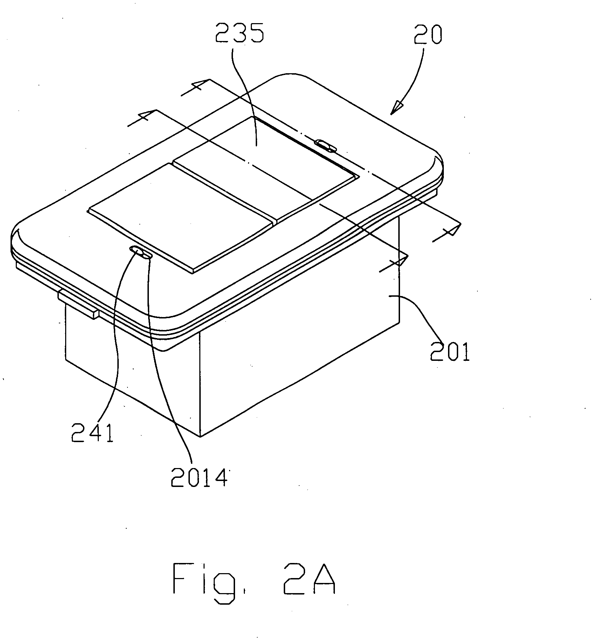

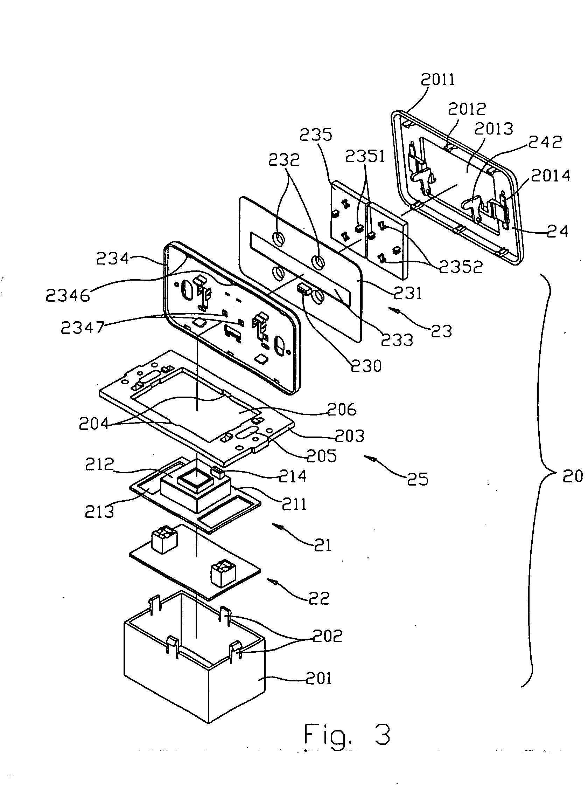

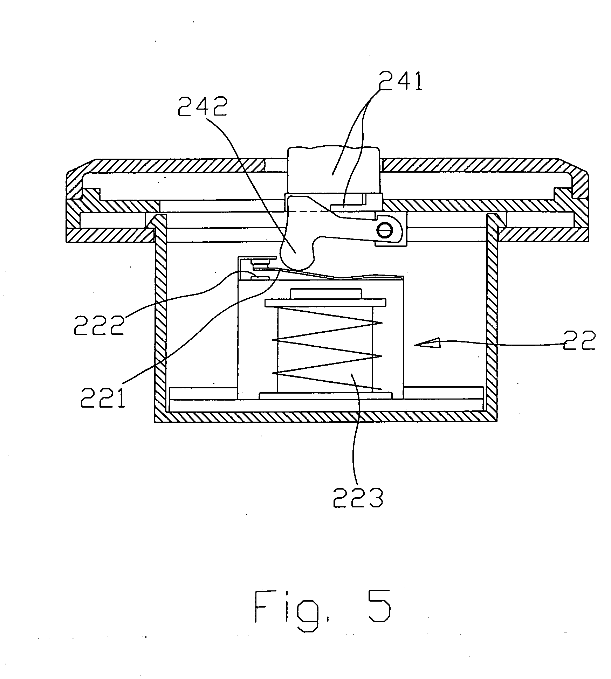

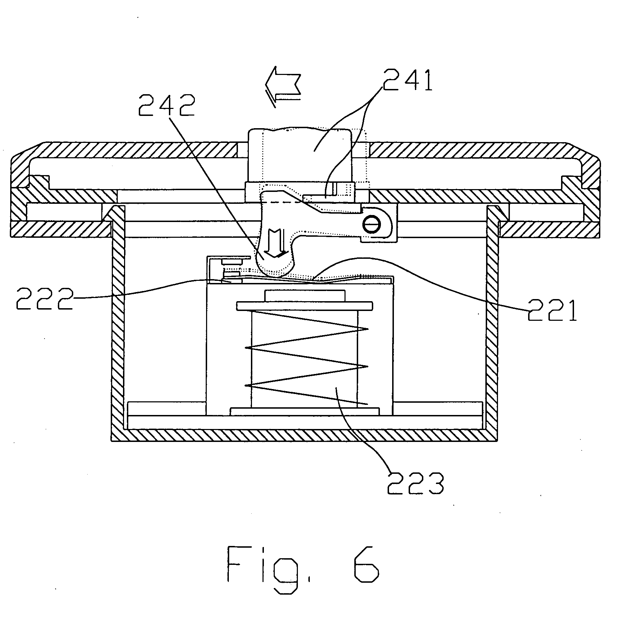

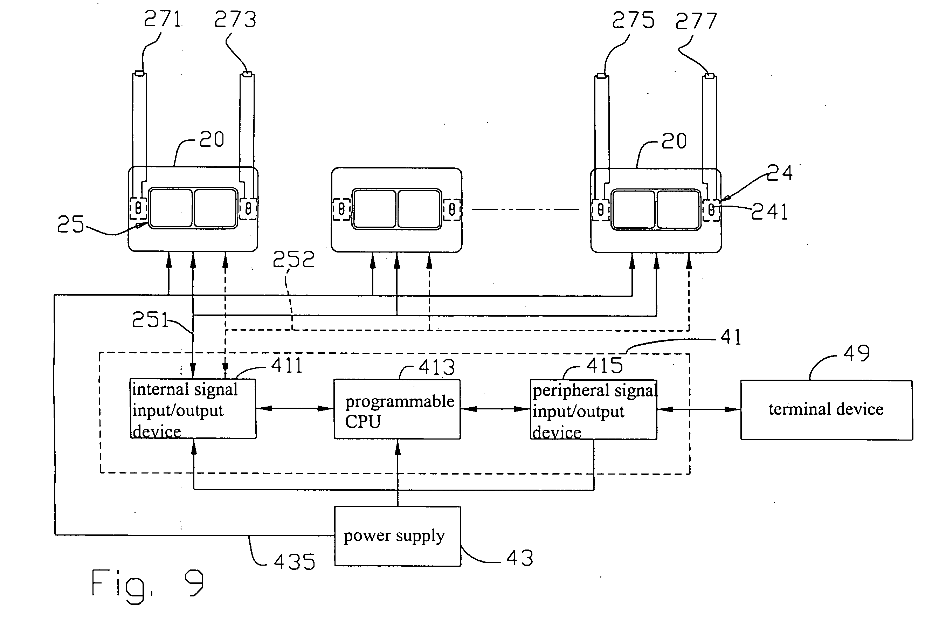

Referring to Figs. 2, 2A and 3, a preferred embodiment of the present invention is shown. The switch assembly 20 of the present invention comprises a housing 201 with four locking hooks 202 formed on the top edge thereof and for containing a function switch 25. (refer to Fig. 9) The function switch 25 includes a control unit 21, a relay unit 22 and an automatic switch 23. The control unit 21 includes a circuit board 211 with two side openings 213, a connector 214 and a CPU 212. The relay unit 22, please further refer to Figs. 5 and 6, includes a relay 223, a conducting sheet 221 and a conducting pad 222. When the control unit 21 and the relay unit 22 are successively installed inside the housing 201, the relay 223 is extruded through the side opening 213. There is a middle plate 203 with a central opening 206 and a loading plate 234 mounted on the housing 201. The central opening 206 further has four grooves 204 formed around the peripheries to be locked with the hooks 202 of the housing 201 respectively and both side of it have slots 205.

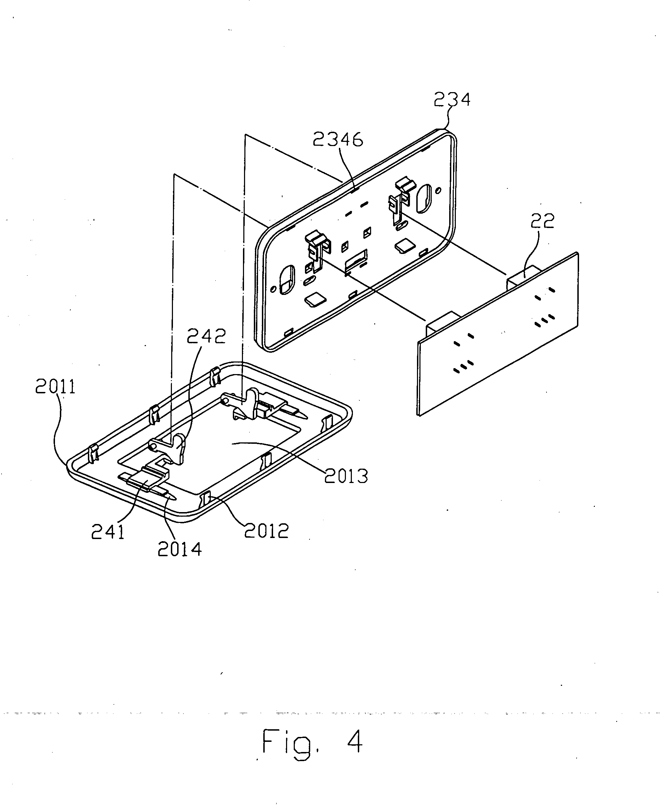

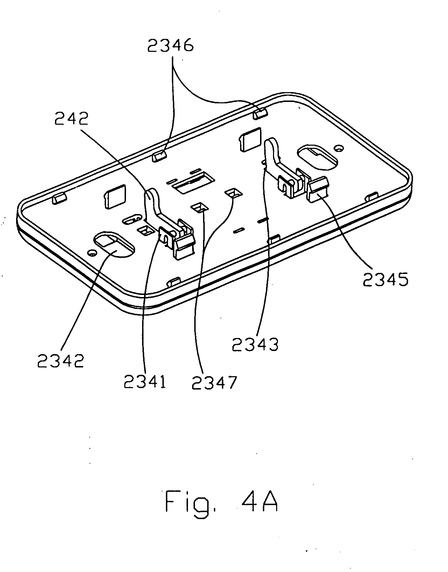

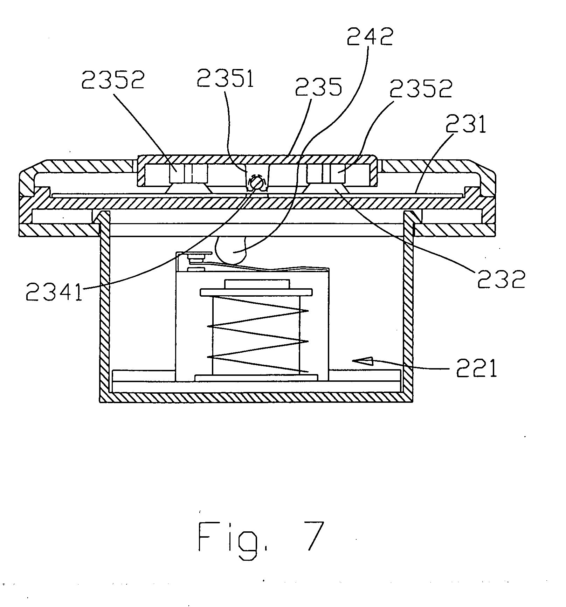

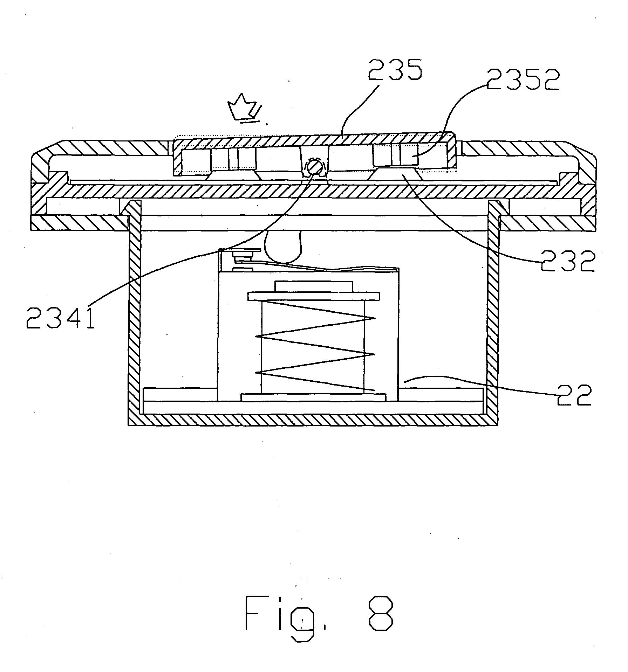

The loading plate 234 is mounted on the middle plate 203, please further refer to Figs. 4 and 4A, including four pivotal member 2341, two through holes 2342, two sliding base 2343, a positioning hook 2345, a plurality of fastening holes 2346 and a plurality of rabbets 2347. The loading plate 234 is fastened on the loading plate 234 and is coupled to the hooks 2012 of a top cover plate 2011, having a central aperture 2013 and a slot 2014, by holes 2346. The automatic switch 23 includes a circuit board 231 and two switch panels 235. The circuit board 231 which includes four conductive films 232, a central slot 233 and a port 230 is mounted on the loading plate 234. The port 230 receives the connector 214 to electrically connect the control unit 21. Two switch panels 235 are located in the central aperture 2013 of the top cover plate 2011. There are two locking elements 2351, each locking elements 2351 connecting to the rabbet 2347, and two contact elements 2352, each contact element 2352 coupling to the conductive film 232, formed on bottom of each switch panel 235. Referring to Figs 7 and 8, pressing the top and bottom of the switch plate 235 can electrically connect and the switch plate 235 is in horizontal plane by the spring of the conductive film 232.

Further, the switch assembly 20 further includes a manual switch 24 having a moving portion 241 (refer to Fig. 2) and a extending portion 242. The moving portion 241 settles in the slot 2014 of top cover plate 2011 and couples to the extending portion 242 that inserts in a slot 2343 of loading plate 234 and is pivotal to the pivotal member 2341 for convenient control to move the moving portion 241 connecting the extending portion 242. Referring to Fig. 5, the manual switch 24 is in switch-off, when pushing the moving portion 241 gets the extending portion 242 moving down and the extending portion 242 connects the connecting pad 222 with pressing the conducting sheet 221, as shown in Fig. 6. Thus, the manual switch 24 can be operated for the single function to control the lighting device to other facility device.

Referring to Fig. 9, the function switch 25 and the switch panel 235 of the present invention is connected to a control module 41 via a signal transmitting line 251. The control module 41 can control the relay 223 located under the conducting sheet 221. When the function switch 25 receives the command signal from the control module 41 for performing the group operation function, the rely 223 is operated to build the connection between the conducting pad 222 and the conducting sheet 221 which is pull downward by a electromagnetic force. On the contrary, the control module 41 actuates an inverse power supply to disconnect the conducting sheet and the conducting pad 222.

Further, in order to perform the single operation function, it is easily achieved by directly pushing the moving portion 241 of the manual switch 24 to get the extending portion 242 connects the connecting pad 222 with pressing the conducting sheet 221. The manual switch 24 is more friendly and easily controlled and will not be cut the connection by the remote control and is better than the function switch 25.

Referring to Fig. 9 again, the present system is accommodated with the present switch assembly 20. The switch assembly 20 includes a control module 41 which has an internal signal input/output device 411 connected to the switch assemblies 20 and 205 of the function switch 25 for accomplishing a bi-directional communication therebetween via the signal transmitting line 251. That is, a command can generates from the internal signal input/output device 411 to the function switch 25 or adversely. A programmable CPU 413 of the control module 41 is for analyzing and determining the command of a transmitting signal and using the internal signal input/output device and the signal transmitting 251 to control the rely 223 and the conducting sheet 221.(refer to Figs. 5 and 6) for determining the electrical line power-on or off

Lighting devices 271 and 273, security devices 275 or other appliance, air-conditioning and facility devices installed in the present system can be performed the group operation function controlled by the control module 41 and further be performed the single operation function by the moving portion 241 of the manual switch 24 alike the common switches.

The internal signal input/output device 441 of the control module 41 can use a wireless communication 252 such as the infrared (IR) communication or the radio frequency (RF) to connect the function switch 25 of the switch assembly 20 or 205. After the CPU 412 analyzes and determines, using the . wireless communication 252 controls the manual switch 24 by the internal signal input/output device 441.

The control module 41 also includes a peripheral signal input/output device 415 to connect a terminal device 49 via the telephone line or other Internet communication lines. It is also capable of commanding the control module 41 by a long-distance remote monitoring and adversely outputting demand such as dialing a emergency call through the peripheral signal input/output device 415. Finally, the power supply 43 provides power to each device through a power line 435.

The switch assembly 205 does not connect any facility device and is for a command on-off switch. That means the switch assembly 205 does not power a facility device on or off but for controlling the operation of the present system. However, it is not difficult for simplifying the switch assembly of the present invention to providing as an on-off switch merely.

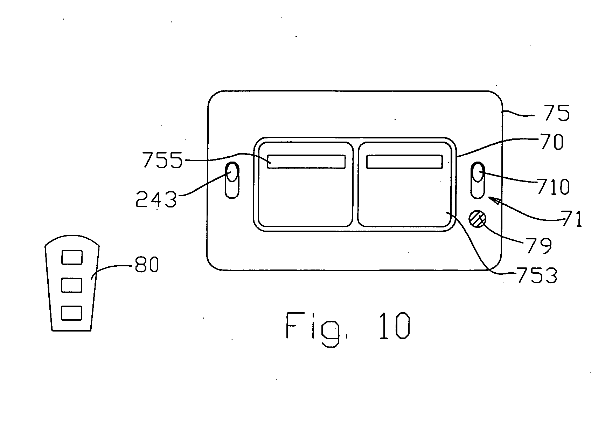

Still another preferred embodiment of the manual switch according the present invention is shown in Fig. 10. The switch assembly further includes a remote control signal receiver (not shown) to receive a remote signal sending from a remote controller 80 besides including a manual switch 71, a push button 710, a function switch 75 and a switch panel 753 installed inside a housing 70. There is at least one indicating lamp 755 on the housing 70 for showing the status so that it is convenient to know the operation is the group function or the single function, on the other hand the operation is the manual switch 71 or the function switch 75. It is easily to understand that the indicating lamp 755 set up on the manual switch 71 can also use to show the working status to know if the function switch 75 or the manual function 71 is operated or failed.

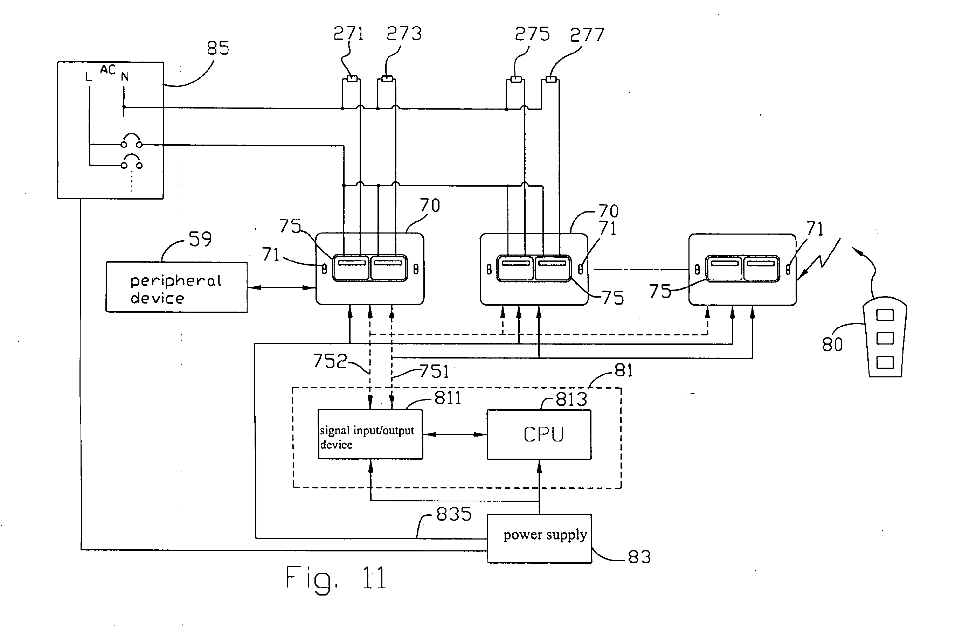

Finally, please refer to Fig. 11, it shows another preferred embodiment of the present switch system. A peripheral device 59 is directly connected to the function switch 75 of one switch assembly 70. A command signal from the peripheral device 59 can be transmitted to a signal input/output device 811 of a control module 81 via a signal transmitting line 751 or a wireless communication 752. A CPU 813 of the control module 81 can also connect to the peripheral device 59 through the signal input/output device 811. Further, user can operate one of the switch assemblies 70 by the remote controller 80 to control the control module 81. Next, there is a main power box 85 directly applies power to the lighting devices 271 and 273, security devices 275 or other appliance, air-conditioning and facility devices 277. It is convenient for assembling workers because the present system is familiar with the traditional wiring system.

The invention being thus described, it will be obvious that the same may be varied in many ways. Such variations are not to be regarded as a departure from the spirit and scope of the invention, and all such modifications as would be obvious to one skilled in the art are intended to be included within the scope of the following claims.

## Claims

1. An intelligent switch assembly, comprising:
a housing;
a function switch installed in the housing including a control unit and at
least one switch panel of an automatic switch;
wherein the function switch is transmitted a signal, pressing the switch panel, to a control module by a signal transmitting circuit;
a relay being controlled by the control module; and
at least one manual switch mounted to the housing, electrifying a connection by controlling a conducting sheet of the relay coupling to a conducting pad.

2. The intelligent switch assembly as claimed in claim 1, wherein the signal transmitting circuit is a wireless transmission.

3. The intelligent switch assembly as claimed in claim 2, wherein the wireless transmission is a radio frequency transmission.

4. The intelligent switch assembly as claimed in claim 1, wherein the control unit electrically coupled to the manual switch.

5. The intelligent switch assembly as claimed in claim 1, wherein the conducting sheet of the relay is controlled by the control module to build an electrically connection of the function switch.

6. The intelligent switch assembly as claimed in claim 1, further comprises a remote signal receiver for receiving a signal sending from a remote controller.

7. The intelligent switch assembly as claimed in claim 1, further comprising an indicating lamp for showing an on-off status of the function switch.

8. The intelligent switch assembly as claimed in claim 1, further comprising an indicating lamp for showing a control status of the relay operated by one of the function switch and the manual switch.

9. The intelligent switch assembly as claimed in claim 1, wherein the control module further comprises a central processor for processing the signal, an internal signal input/output device for connecting the central processor, the function switch and the manual switch, and a peripheral signal input/output device for connecting the central processor and a peripheral device.

10. The intelligent switch assembly as claimed in claim 1, wherein the control module comprising a central processor for processing the signal and a signal input/output device for connecting the central processor, the function switch and the manual switch.

11. The intelligent switch assembly as claimed in claim 1, wherein the manual switch further comprises a connecting portion for obtain a shafting operation to control the connection of the conducting sheet and the conducting pad.

12. An intelligent switch system comprising:
a switch assembly including a manual switch, having a conducting sheet and a conducting pad, and a function switch, the function switch connecting to a control module by a signal transmitting circuit, and further including a relay connecting to the control module the conducting sheet and the conducting sheet being positioned according to select form the manual switch or the function switch.

13. The intelligent switch system as claimed in claim 12, wherein the control module further comprises a central processor for processing the signal, an internal signal input/output device for connecting the central processor, the function switch and the manual switch, and a peripheral signal input/output device for connecting the central processor and a peripheral device.

14. The intelligent switch system as claimed in claim 12, wherein the manual switch couples to any facility device.

15. The intelligent switch system as claimed in claim 12, wherein the facility device includes one of an appliance device, air-conditioning device, lighting device, security device and curtain device.

16. The intelligent switch system as claimed in claim 12, wherein the control module includes a central processor for processing the signal and a signal input/output device for connecting the central processor, the function switch and the manual switch.

17. The intelligent switch system as claimed in claim 16, wherein the function switch couples to a peripheral device.

18. The intelligent switch system as claimed in claim 12, wherein the switch assembly further comprises a remote signal receiver for receiving a signal sending from a remote controller.

19. The intelligent switch system as claimed in claim 12, wherein the signal transmitting line is a wireless transmission.

20. The intelligent switch system as claimed in claim 19, wherein the wireless transmission is a radio frequency transmission.
